# EUROPEAN PATENT SPECIFICATION

(11) **EP 4 226 758 B1**
(45) Date of publication and mention of the grant of the patent: **13.11.2024**
(21) Application number: 23152647.6
(22) Date of filing: 20.01.2023
(51) Int. Cl.: A01F 15/04, A01F 15/08

(54) **AGRICULTURAL BALER**
LANDWIRTSCHAFTLICHE BALLENPRESSE
PRESSE À BALLES AGRICOLE

(30) Priority: 14.02.2022 US 202263267970 P
(43) Date of publication of application: 16.08.2023
(73) Proprietor: Agco Corporation, Duluth, Georgia 30096 (US)
(72) Inventor: Weller, Lucas Andrew, Hesston, 67062 (US)
(74) Representative: AGCO Intellectual Property Department

(56) References cited:
- WO-A1-2022/026811
- US-A- 4 187 941
- US-A- 4 788 901
- US-B2- 11 140 830

## Description

### FIELD OF THE INVENTION

The present invention relates to an agricultural baler and in particular to a baler of the square bale type. The invention has particular relevance to an arrangement for discharge of such bales from the baler.

### BACKGROUND

It is known to provide balers of the kind that gather harvested crop from a windrow formed on the ground and then compact the harvested crop into bales. In a known kind of apparatus, the harvested crop is lifted from a formed windrow by a pick up mechanism and transferred to a stuffer chute before being introduced into a first end of a baling chamber. A reciprocating plunger is provided to compress the crop material into a flake and by advancing consecutive flakes within the baling chamber under the action of the plunger to form a bale. Such parallelepiped bales are generally elongate and known as square bales. Once a bale of a certain size has been formed a knotter mechanism is actuated to tie the formed bale. The formed bale will then be driven from a second end of the baling chamber to an ejection chute or platform from where the formed bale will be deposited to the ground. Collection of the deposited formed bales then follows as a separate operation.

WO2022/026811 A1 (Whitaker et al) discloses an example of an agricultural baler in which formed bales are driven from a baling chamber to an ejection chute or platform from where the formed bale(s) will be deposited to the ground. One embodiment shown can be operated to select between a straight drop of a released bale using concurrent opening of chute doors, and a drop involving a 90° turn using phased opening of the two doors, depending on deposit requirements.

Nevertheless, it is not ideal that formed bales are dropped from the end of an ejection platform. In particular there can be a lack of control as to how the bales are ejected and their subsequent orientation on the ground, the orientation of the bales affecting the ease of collection of such bales. Accordingly, there is a desire to more closely control the depositing of formed bales from such a baler.

It is an advantage of the disclosed apparatus that this problem is addressed.

In certain embodiments an operator can elect how a formed bale is deposited. However, it is also advantageous to have a specific deposit mode based on a machine parameter, for example in order easily to distinguish bales above or below a predetermined moisture threshold.

### SUMMARY OF THE INVENTION

According to a first aspect of the present invention a control system for controlling operation of one or more controllable components of an agricultural baler is provided, the control system comprising one or more controllers, and configured to: receive data indicative of a machine parameter of the agricultural baler; determine, in dependence on the machine parameter, a deposit strategy for depositing one or more formed bales from the agricultural baler, the deposit strategy including an indication of a deposit mode; and generate and output one or more control signals for controlling one or more operational components associated with the baler in dependence on the determined bale deposit strategy.

Preferably, the deposit strategy may comprise executing one or more of a linear deposit mode and a quarter turn deposit mode.

Preferably, the control system of the present invention is operable to determine a deposit strategy based on moisture content of the one or more formed bales.

Preferably, the one or more operational components comprises a user interface, such as a display screen. Preferably, the user interface is operable to provide information indicative of the determined deposit strategy to an operator of the baler. Preferably, the control system is configured to generate and output the one or more control signals for controlling operation of the user interface to display the determined deposit strategy to an operator of the agricultural baler.

Preferably, the operational component comprises a ejection chute for automating deposit of one or more formed bales in accordance with the determined deposit strategy. Preferably, the control system is configured to generate and output the one or more control signals for automatically controlling the ejection chute to deposit the one or more formed bales.

Preferably the control system is configured to: receive sensor data from a moisture sensor associated with the agricultural baler; and determine a moisture level of a formed bale in dependence thereon. Preferably, the moisture sensor comprises one or more of: an infrared sensor, a resistive sensor, an optical sensor; and a capacitive sensor. Preferably, the moisture sensor is mounted or otherwise coupled to the agricultural baler and configured to monitor material collected into the agricultural baler. Preferably, the moisture sensor is mounted or otherwise coupled to the agricultural baler and configured to monitor material being collected by a crop pick-up of the agricultural baler. Preferably, the moisture sensor may be configured to monitor material within a baling chamber of the baler.

Preferably, the control system is configured to determine an expected moisture level in dependence on data indicative of the operating environment of the agricultural baler. Preferably, the operating environment data comprises a mapped environment comprising information indicative of a measured or expected moisture level for material at one or more locations within the mapped environment. More preferably, the operating environment data comprises an indication of one or more environmental conditions, including one or more of: a temperature, a time of year; a time of day; a rainfall measurement; and a humidity.

Preferably, the control system is configured to receive a user input indicative of a moisture level provided by an operator of the baler and determine the deposit strategy in dependence thereon. Preferably, the user input may be provided via a user interface of the baler.

Alternatively, or additionally, the control system of the present invention is operable to determine a deposit strategy based on bale length, bale weight or flake count of the one or more formed bales within the ejection chute.

Alternatively, or additionally, the control system of the present invention is operable to determine a deposit strategy based on one or more of the determined protein content, fibre content, nitrate content, ash content, moisture content, nitrate content or ash content of the one or more formed bales within the ejection chute.

According to a further aspect of the invention there is provided a system, comprising: a ejection chute for depositing a plurality of formed bales; and a control system of any preceding aspect of the invention configured to control operation of the ejection chute in accordance with a determined deposit strategy.

According to a second aspect of the invention there is provided an agricultural baler comprising and/or being controllable by a control system, or comprising a system as described herein with reference to any preceding aspect of the invention.

A third aspect of the invention provides a method of controlling operation of one or more controllable components of an agricultural baler, comprising: receiving data indicative of a machine parameter relating to one or more formed bales formed by the agricultural baler; determining, in dependence on the machine parameter, a deposit strategy for depositing the one or more formed bales, the deposit strategy including an indication of a deposit mode for each formed bale; and controlling one or more operational components associated with the baler in dependence on the determined deposit strategy. More preferably, the machine parameter is the moisture content of each formed bale.

Preferably, the one or more operational components comprises a user interface, such as a display screen. Preferably, the user interface is operable to provide information indicative of the determined deposit strategy to an operator of the baler. Preferably, the method includes controlling operation of the user interface to display the determined deposit strategy to an operator of the agricultural baler.

Preferably, the operational component comprises a ejection chute for automating deposit of each of the formed bales in accordance with the determined deposit strategy.

Preferably, the method includes: receiving sensor data from a moisture sensor associated with the agricultural baler; and determining a moisture level of each formed bale in dependence thereon. Preferably, the moisture sensor comprises one or more of: an infrared sensor, a resistive sensor, an optical sensor; and a capacitive sensor. Preferably, the moisture sensor is mounted or otherwise coupled to the agricultural baler and configured to monitor material collected into the baler. Preferably, the moisture sensor is mounted or otherwise coupled to the agricultural baler and configured to monitor material being collected by a crop pick-up of the agricultural baler. Preferably, the moisture sensor is configured to monitor material within a baling chamber of the agricultural baler.

Preferably, the method includes determining an expected moisture level in dependence on data indicative of the operating environment of the baler. Preferably, the operating environment data comprises a mapped environment comprising information indicative of a measured or expected moisture level for material at one or more locations within the mapped environment. Preferably, the operating environment data comprises an indication of one or more environmental conditions, including one or more of: a temperature, a time of year; a time of day; a rainfall measurement; and a humidity.

Preferably, the method includes receiving a user input indicative of a moisture level provided by an operator of the agricultural baler and determine the deposit strategy in dependence thereon. The user input may be provided via a user interface of the baler.

Alternatively, or additionally, the method includes receiving sensor data based on bale length, bale weight or flake count of the one or more formed bales within the ejection chute to determine a deposit strategy.

Alternatively, or additionally, the method includes receiving sensor data based on one or more of the determined protein content, fibre content, nitrate content, ash content, moisture content, nitrate content or ash content of the one or more formed bales within the ejection chute to determine a deposit strategy.

A further aspect of the invention provides a computer readable program comprising instructions which, when the program is executed by a computer, causes the control system of the first aspect or the agricultural baler of the second aspect to implement the method of the third aspect.

### BRIEF DESCRIPTION OF THE DRAWINGS

The invention will now be described, by way of example only, with reference to the accompanying drawings, in which:
Figure 1 shows a view of an agricultural baler including an ejection chute in accordance with the present invention;
Figure 2 shows a section thorough a first embodiment of an ejection chute for use with the present invention with selectively displaceable first and second panels in a first position and a bale within the ejection chute;
Figure 3 shows a section thorough the ejection of chute Figure 2 with the selectively displaceable panels in a second position and a bale beginning to exit the the ejection chute;
Figure 4 shows a section thorough the ejection chute of Figure 2 with the selectively displaceable panels in a third position and a bale further exiting the ejection chute;
Figure 5 shows a section thorough the ejection chute of Figure 2 with the selectively displaceable panels in a fourth position and a bale further exiting the ejection chute;
Figure 6 shows a section thorough the ejection chute of Figure 2 with the selectively displaceable panels in a fifth position and a bale further exiting the ejection chute;
Figure 7 shows a section thorough the ejection chute of Figure 2 with the selectively displaceable panels in a sixth position and a bale further exiting the ejection chute;
Figure 8 shows a section thorough the ejection chute of Figure 2 with the selectively displaceable panels in a final position and a bale on the ground;
Figure 9 shows a view similar to that shown in Figures 2 to 8 in which the ejection chute is controlled to execute a quarter turn deposit of a formed bale;
Figure 10 shows a section thorough a second embodiment of an ejection chute for use with the present invention again illustrating a quarter turn deposit of a formed bale;
Figure 11 shows a section thorough a third embodiment of an ejection chute for use with the present invention illustrating again illustrating a quarter turn deposit of a formed bale;
Figure 12 shows a section thorough a fourth embodiment of an ejection chute arrangement for use with the present invention illustrating linear deposit of parallel formed bales;

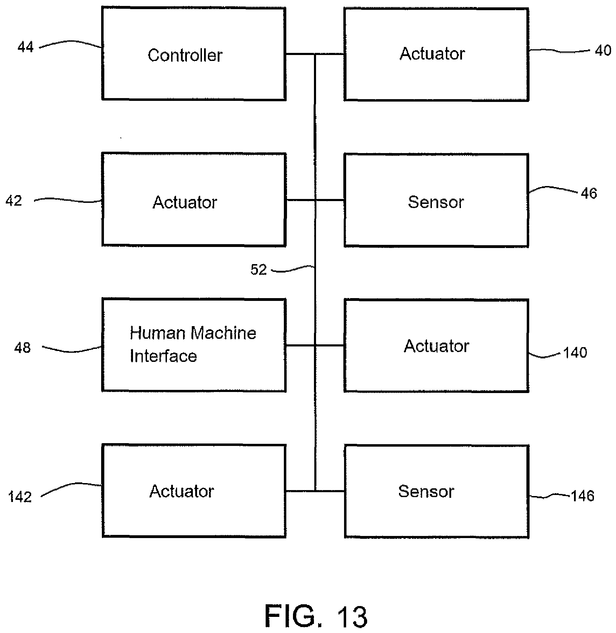

Figure 13 shows a schematic view of elements of an aspect of the present invention; and
Figure 14 is a schematic diagram illustrating an embodiment of a control system in accordance with the invention; and
Figure 15 is a schematic diagram of a tractor-baler combination embodying aspects of the present invention.

### DETAILED DESCRIPTION OF SPECIFIC EMBODIMENTS OF THE INVENTION

The invention will now be described in the following detailed description with reference to the drawings, wherein preferred embodiments are described in detail to enable practice of the invention. Although the invention is described with reference to these specific preferred embodiments, it will be understood that the invention is not limited to these preferred embodiments. But to the contrary, the invention includes numerous alternatives, modifications and equivalents as will become apparent from consideration of the following detailed description.

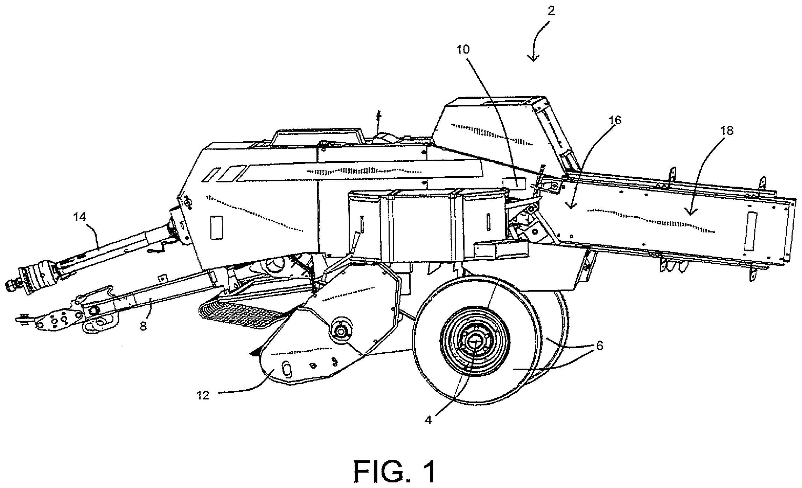

With reference to Figure 1, an agricultural baler 2 is shown. The baler 2 has a wheeled chassis or frame including an axle 4 and a pair of laterally spaced wheels 6 that support the chassis above the ground. The baler 2 is provided with a forwardly extending tongue 8 for connecting the baler 2 to a towing vehicle, such as a tractor 80 (Figure 16).

The baler 2 additionally comprises a baling chamber 10, extending generally in a fore- and-aft direction and which are supported on the chassis. The baler 2 is provided with a pick up apparatus 12 by which harvested crop material arranged in a windrow on a ground surface may be lifted and directed towards the baling chamber 10. The harvested crop material is directed to a stuffer chute at a forward end of the baling chamber 10. The harvested crop material there forms a flake of harvested crop material. The baler 2 is further provided with a reciprocating plunger that compresses the flake of harvested crop and pushes it rearwards into the baling chamber 10 to generate a forming bale within the baling chamber. Movement of the plunger is enabled by a drive connection 14 adapted to be connected to a Power Take Off (PTO) of the towing vehicle.

The baler 2 additionally comprises a plurality of knotter units 16 immediately downstream of the baling chamber 10 for tying one or more strands of binding material (such as twine, wire, cord or the like) around the bales of crop material being formed in the baling chambers.

Once the forming bale has been formed, the formed bale is directed to a discharge or ejection chute 18. In practice the baling chamber 10 and the discharge chute 18 may be formed as a single channel. Alternatively, the discharge chute 18 may be coupled to the baling chamber 10 in any suitable manner. The preference is to form the ejection chute of the present invention as part of the channel forming the baling chamber to avoid lengthening this channel. However, certain advantages may still be obtained by forming the ejection chute of the present invention as a "bolt-on" component to existing ejection chutes.

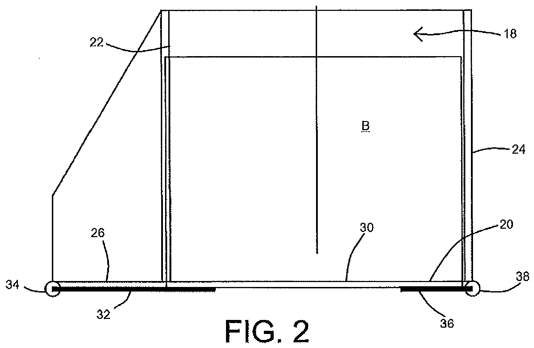

Turning to Figure 2, a section of an ejection chute 18 for use with the invention is shown. The ejection chute 18 comprises a channel having a base wall 20 and first and second side walls 22,24 extending upwards from either side of the base wall 20. The base wall 20 conveniently includes an outwardly extending flange 26 extending to one side of the ejection chute 18. The ejection chute 18 may optionally include an upper wall extending between the first and second side walls 22,24.

A region of the base wall is provided with an opening or window 30. The window 30 is suitable shaped and sized to allow a formed bale B to pass though the window 30. A first selectively displaceable panel 32 is adapted to pivot about a longitudinal axis 34 located to a first side of the window 30. In the illustrated embodiment the longitudinal axis 34 of the first selectively displaceable panel 32 extends along a distal end of the flange 26. A second selectively displaceable panel 36 is adapted to pivot about a longitudinal axis 38 located at a second side of the window. In the illustrated embodiment the longitudinal axis 38 of the second selectively displaceable panel 36 extends along a base of the second wall 24.

The first and second selectively displaceable panels 32,36 are operable between a first position in which travel of a formed bale through the window 30 is prevented by the first and second selectively displaceable panels 32,36 and a second position in which controlled egress of the formed bale through the window is permitted (as described below). As such, operation of the first and second selectively displaceable panels 32,36 provides a deposit mechanism for controlled deposit of the formed bales through the window 30.

It is not necessary for the first and second selectively displaceable panels 32,36 to extend across the window 30. In the illustrated embodiment, the first and second selectively displaceable panels 32,36 only extend part way across the window 30 and are sufficient to retain the formed bale B within the ejection chute 18.

The first and second selectively displaceable panels 32,36 are each provided with suitable actuators 40,42, for example hydraulic actuators. A controller 44 is provided to control movement of the actuators 40,42 and so movement of the first and second selectively displaceable panels 32,36. A sensor 46 in communication with the controller 44 may optionally be provided to determine when the formed bale B is in position above the window 30.

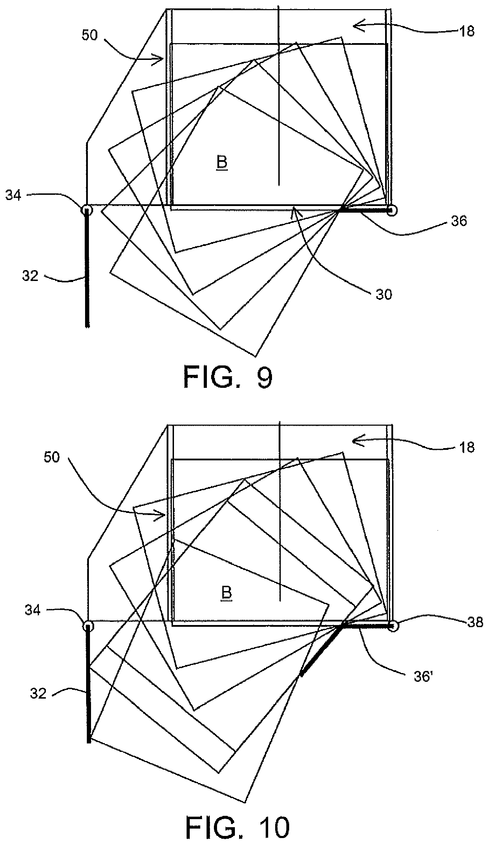

The ejection chute 18 is also provided with a second window 50 is provided in the second side wall 24 (Figure 9). The second window 50 is again sized and shaped to allow passage of a formed bale B. A lower edge of the second window 50 is contiguous with the first window 30 to form a single large opening.

In a first deposit strategy, the first and second selectively displaceable panels 32,36 are actuated together to perform a linear deposit of formed bale from within the ejection chute 18.

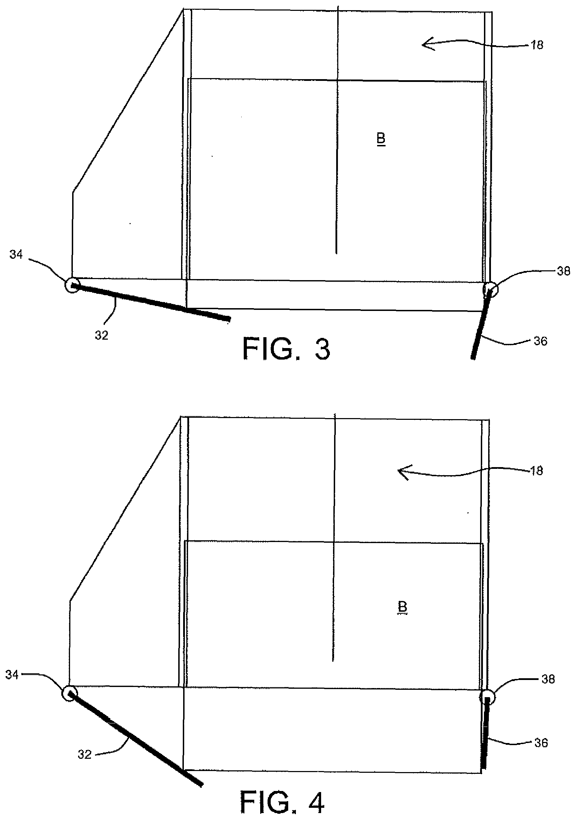

As seen in Figure 3, and the actuator 40 allows a relatively small angular movement of the first selectively displaceable panel 32 and the actuator 42 allows a relatively large angular movement of the second selectively displaceable panel 36. The formed bale B is allowed to descend a short distance though the window 30.

Once the second selectively displaceable panel 36 is arranged to depend substantially vertically the actuator 40 ceases to move the second selectively displaceable panel 36. The actuator 42 continues to control movement of the first selectively displaceable panel 32 about the longitudinal axis 38 so as allow the formed bale B to descend from the ejection chute 18 in a controlled manner (Figure 4).

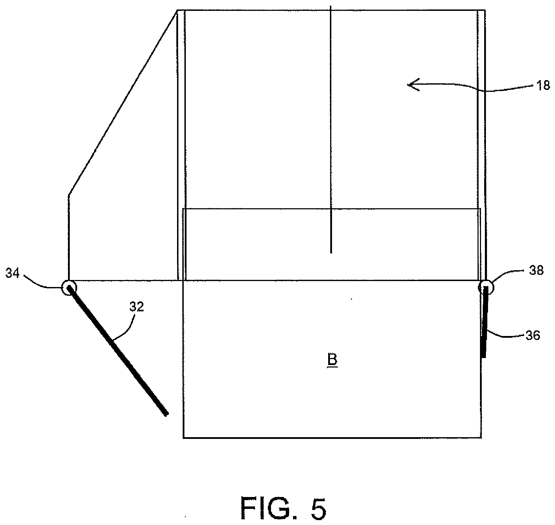

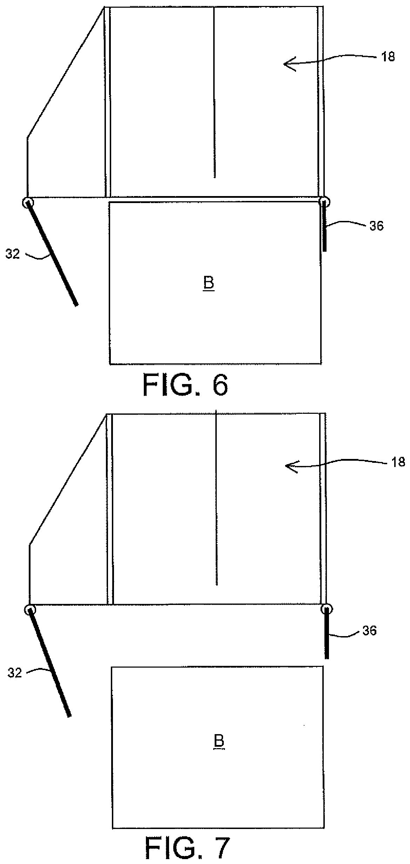

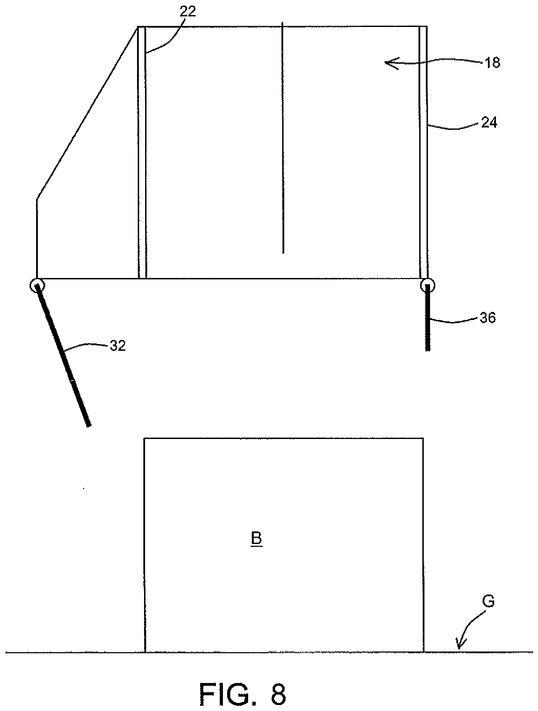

Continued movement of the first selectively displaceable panel 32 about the longitudinal axis 34 under the action of the actuator 40 then removes the first selectively displaceable panel 32 from the path of the formed bale B (Figure 5) allowing the formed bale B to drop out of the ejection chute 18 (Figure 6) toward the ground (Figure 7 before the formed bale B lands on the ground beneath the ejection chute 18 of the baler 2 (Figure 8).

In this way the bale the formed bale B is falling freely for a shorter distance than when ejected from the rear of the ejection chute. As a result, the formed bale B is deposited to the ground in a far more controlled manner.

A second deposit strategy may be adopted as illustrated in Figure 9. In this strategy, the actuators 40, 42 are operated only to permit movement of the first selectively displaceable panel 32 about the longitudinal axis 34, with the second selectively displaceable panel 36 being held in position extending horizontally beneath the window 30. In this embodiment the formed bale B will topple over the second selectively displaceable panel 36 and as it passes through the first and second windows 30,50 perform a quarter turn. The substantially vertically depending first selectively displaceable panel 32 will act as a guide such that the formed bale B is directed to be deposited on the ground G on a shorter side (Figure 9).

Other arrangements or constructions of the second selectively displaceable panel may be considered. For example, the second selectively displaceable panel 36' may be formed as an angled plate comprising a first portion extending from the longitudinal axis 38 and a second portion extending downward at an angle to the first portion (Figure 10). It will be understood that in this embodiment greater control of the quarter turn of the formed bale B is provided for as the second portion of the second selectively displaceable panel 36' and the substantially vertically depending first selectively displaceable panel 32 together provide greater guidance for the movement of the formed bale as it is deposited from the ejection chute 18 to the ground.

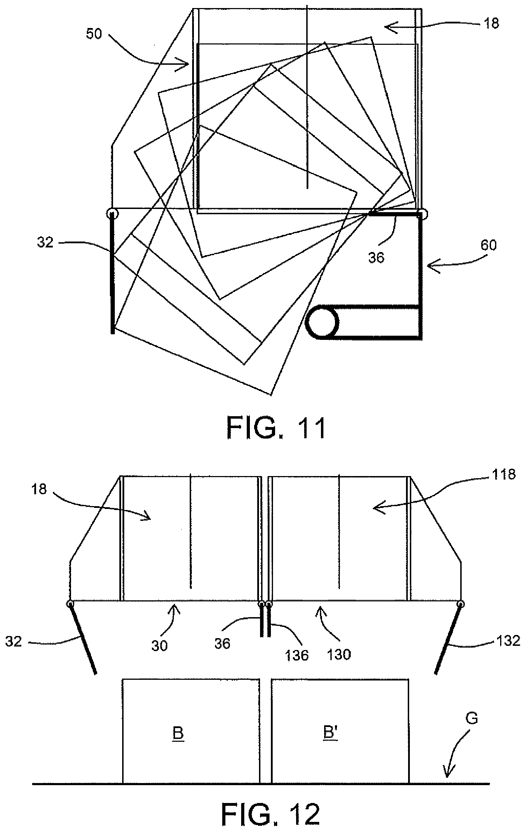

A further embodiment is shown in Figure 11. While the first selectively displaceable panel 32 takes the form of the first embodiment, the ejection chute 18 is further provided with a deflector element 60. In the illustrated embodiment, the deflector element 60 is substantially L-shaped. A first limb of the deflector 60 extends substantially vertically from the second selectively displaceable panel 36 and the second limb extends substantially horizontally inward beneath the ejection chute 18. The second limb extends further than the second selectively displaceable panel 36. In practice movement of the lower end of the toppling formed bale B is further guided or constrained between a distal end of the second limb and the substantially vertically depending first selectively displaceable panel 32.

It will be appreciated that in these embodiments both the first and second selectively displaceable panels 32, 36 may be operated as in the first embodiment so to allow the formed bale B to drop and be deposited on a longer side. The operator may select which of the drop methods is to be utilised by way of a Human Machine Interface 48 in electronic communication with the controller 44. The Human Machine interface 48 my be provided on the baler 2 such that a selection may be made prior to baling or incorporated into the towing vehicle, for example by being located within the driver's cab, allowing the operator to select the chosen deposit method while baling.

The electronic controller 44 may communicate with the other elements by way of a suitable communications network 52.

A still further embodiment is shown in Figure 12. In this embodiment a second ejection chute 118 is shown alongside the first. The second ejection chute 118 is provided with a first selectively displaceable panel 132 and a second selectively displaceable panel 136 to selectively obstruct a window 130 in a base wall of the second ejection chute 118. Additional actuators 140,142 are provided in electronic communication with the controller 44. An additional sensor 146 in communication with the controller 44 may optionally be provided to determine when the formed bale B' is in position above the window 130.

It will be understood that the second ejector chute 118 is of similar construction to the first and second embodiments save that the constructions are reversed such that the second selectively displaceable panel 36 of the first ejection chute 18 is located adjacent the second selectively displaceable panel 136 of the second ejection chute 118. It will be understood that the controller 44 operates so that formed bales B, B1 may be ejected vertically (linear deposit mode) or rotated during deposit (quarter turn deposit mode) as desired.

It will be understood that should the actuators 40,42,140,144 cease to operate for any reason the formed bales B, B' will remain supported within the ejection chute 18 or chutes 18,118 such that continued operation of the reciprocating plunger to form further bales will simply lead to the ejection of the formed bale B or bales B,B' from the rear of the ejection chute 18 or chutes 18,118 as is currently known.

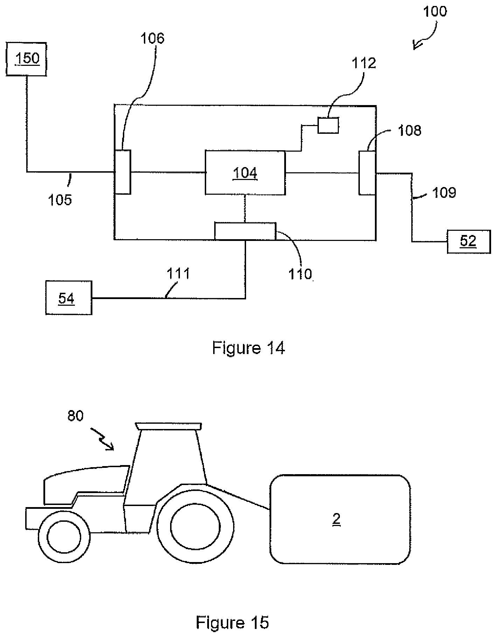

A moisture level for each formed bale may be determined. For example, the baler 2 may include one or more moisture sensors for monitoring a moisture level associated with the crop material collected by the pick up apparatus 12. In an illustrated embodiment (Figure 14) the moisture sensor comprises a capacitive moisture sensor 150 mounted on an interior wall of the baling chamber 10. The capacitive sensor 150 has a sensing element which contacts the crop material within the baling chamber 10 in use to obtain a measurement of the moisture level associated with the crop material, as is known in the art. The moisture sensor 150 is used by a control system 100 of the baler 2, to determine a moisture level associated with each formed bale and determine therefrom an appropriate deposit strategy for each formed bale.

The deposit strategy may be used by the control system 100 for controlling operational components of the baler 2, including the ejection chute for automating deposit of each formed bale in accordance with the determined deposit strategy, and/or control over a user interface 54 associated with the baler 2, e.g. provided as a display terminal of a coupled tractor 80 or indeed a handheld terminal, to provide an indication of the determined deposit strategy to an operator of the baler 2.

Figure 14 illustrates the example control system 100 further. As shown, the control system 100 comprises a controller 102 having an electronic processor 104, an electronic input 106 and electronic outputs 108, 110. The processor 104 is operable to access a memory 112 of the controller 102 and execute instructions stored therein to perform the steps and functionality of the present invention discussed herein, e.g. by controlling the user interface 54, to indicate, e.g. to an operator of the baler 2, information indicative of the determined deposit strategy, and/or controlling operation of the ejection chute 18 through generation and output of one or more control signals thereto, or to a local control unit of the ejection chute 18 , e.g. control unit 72.

The processor 104 is operable to receive sensor data via input 106 which, in the illustrated embodiment, takes the form of input signals 105 received from the moisture sensor 150. Utilising this data, the processor 104 is configured to analyse the data and determine therefrom a measure of a moisture level associated with the material collected by the baler 2. As discussed herein, the determined moisture level is used to determine a deposit strategy for the baler 2, and in particular an indication of the deposit mode. A notification indicative thereof can be presented to an operator of the baler 2 via the user interface 54.

As described above, the controller 102 includes an electronic output 108 configured output control signals 109 generated by the processor 104 for controlling operation of the ejection chute 18. Specifically, processor 104 is operable to generate, and the controller 102 operable to then output via electronic output 108, control signals 109 for controlling operation of the ejection chute 18 in the manner described herein, e.g. through selection of the appropriate deposit mode (as determined by the deposit strategy), controlling movement of the displaceable panels 32, 36 as required. As will be appreciated, the controller 102 may output the control signals 109 to a local processing unit, e.g. the control unit 72 of the ejection chute 18 for controlling operation thereof.

Electronic output 110 is operably coupled to the user interface 54 of the baler 2. Here, the control system 100 is operable to control operation of the user interface 54, e.g. through output of control signals 111 in order to display data to an operator of the baler 2 relating to the operation of the control system 100. Specifically, the control system 100 is operable to control the user interface 54 to display to the operator an indicator of the deposit strategy.

The electronic input may additionally or alternatively receive data representative of other machine parameters including for example receiving sensor data based on bale length, bale weight or flake count of the one or more formed bales within the ejection chute to determine a deposit strategy. Where the moisture sensor is a NIR (near infrared) sensor the machine parameter may include one or more of the determined protein content, fibre content, nitrate content, ash content, moisture content, nitrate content or ash content of the formed bale.

By way of example the deposit strategy may be determined to separate the bales deemed to have an overly high moisture content, by configuring the baling strategy to deposit such bales in a first mode and all remaining bales in a second mode to show the stacker or operator that that any individual bale deposited meets or does not meet the predetermined moisture criteria. Alternatively, a deposit strategy may be implemented to alert a stacker or operator of a different condition such as bale length (if the bale was too long or too short), weight (if the bale was too heavy or light), or flake count (if there were too many or too few flakes in a given formed bale). Such a strategy could be set by the operator in the user interface 54.

Figure 15 illustrates an agricultural vehicle in the form of a tractor 1 operably coupled to baler 2. It will be appreciated that, in use, the tractor 1 and baler 2 may be operably coupled at tow hitch of the baler 2, although other couplings are envisaged and will be appreciated by the skilled reader.

From reading the present disclosure, other modifications will be apparent to persons skilled in the art. Such modifications may involve other features which are already known in the field of square balers and component parts therefore and which may be used instead of or in addition to features already described herein.

## Claims

1. A control system for controlling operation of one or more controllable components of an agricultural baler (2), the control system comprising one or more controllers (44), and configured to: receive data indicative of a machine parameter of the agricultural baler (2); determine, in dependence on the machine parameter, a deposit strategy for depositing one or more formed bales (B) from the agricultural baler (2), the deposit strategy including an indication of a deposit mode; and generate and output one or more control signals for controlling one or more operational components associated with the baler (2) in dependence on the determined bale deposit strategy.

2. A control system according to claim 1, wherein the deposit strategy may comprise executing one or more of a linear deposit mode and a quarter turn deposit mode.

3. A control system according to claim 1 or claim 2, wherein the control system is operable to determine a deposit strategy based on a moisture content of the one or more formed bales.

4. A control system according to any of claim 1 to claim 3, wherein the one or more operational components comprises a user interface operable to provide information indicative of the determined deposit strategy to an operator of the baler.

5. A control system according to claim 4, wherein the control system is configured to generate and output the one or more control signals for controlling operation of the user interface to display the determined deposit strategy to an operator of the agricultural baler.

6. A control system according to any of claim 1 to claim 5, wherein the operational component comprises an ejection chute (18) for automating deposit of one or more formed bales (B) in accordance with the determined deposit strategy.

7. A control system according to claim 6, wherein the control system is configured to generate and output the one or more control signals for automatically controlling the ejection chute (18) to deposit the one or more formed bales (B).

8. A control system according to any of claim 1 to claim 7, wherein the control system is configured to: receive sensor data from a moisture sensor associated with the agricultural baler; and determine a moisture level of a formed bale in dependence thereon.

9. A control system according to claim 8, wherein the moisture sensor comprises one or more of: an infrared sensor, a resistive sensor, an optical sensor; and a capacitive sensor (150).

10. A control system according to claim 8 or claim 9, wherein the moisture sensor is mounted or otherwise coupled to the agricultural baler (2) and configured to monitor material collected into the agricultural baler (2).

11. A control system according to claim 10, the moisture sensor is mounted or otherwise coupled to the agricultural baler (2) and configured to monitor material being collected by a crop pick-up (12) of the agricultural baler (2) and/or material within a baling chamber (10) of the baler (2).

12. A control system according to any of claim 1 to claim 7, wherein the control system is configured to determine an expected moisture level in dependence on data indicative of the operating environment of the agricultural baler (2).

13. A control system according to claim 12, wherein the operating environment data comprises a mapped environment comprising information indicative of a measured or expected moisture level for material at one or more locations within the mapped environment.

14. A control system according to claim 12 or claim 13, wherein the operating environment data comprises an indication of one or more environmental conditions, including one or more of: a temperature, a time of year; a time of day; a rainfall measurement; and a humidity.

15. A control system according to any of claim 1 to claim 14, wherein the control system is configured to receive a user input indicative of a moisture level provided by an operator of the baler (2) and determine the deposit strategy in dependence thereon.

16. A control system according to any of claim 1 to claim 15, wherein the control system is operable to determine a deposit strategy based on bale length, bale weight or flake count of the one or more formed bales (B) within the ejection chute (18).

17. A control system according to any of claim 1 to claim 15, wherein the control system is operable to determine a deposit strategy based on one or more of the determined protein content, fibre content, nitrate content, ash content, moisture content, nitrate content or ash content of the one or more formed bales within the ejection chute.

18. A control system, comprising: an ejection chute (18) for depositing a plurality of formed bales (B) ; and a control system according to any of claim 1 to claim 17 configured to control operation of the ejection chute (18) in accordance with a determined deposit strategy.

19. An agricultural baler (2) comprising and/or being controllable by a control system according to any of claim 1 to claim 17, or comprising a system according to claim 18.

20. A method of controlling operation of one or more controllable components of an agricultural baler (2), comprising: receiving data indicative of a machine parameter relating to one or more formed bales (B) formed by the agricultural baler (2); determining, in dependence on the machine parameter, a deposit strategy for depositing the one or more formed bales (B), the deposit strategy including an indication of a deposit mode for each formed bale (B); and controlling one or more operational components associated with the baler (2) in dependence on the determined deposit strategy.

21. A computer readable program comprising instructions which, when the program is executed by a computer, causes the control system of claim 1 to claim 18 or the agricultural baler of claim 19 to implement the method of claim 20.

## Patentansprüche

1. Steuersystem zum Steuern eines Betriebs einer oder mehrerer steuerbarer Komponenten einer landwirtschaftlichen Ballenpresse (2), wobei das Steuersystem eine oder mehrere Steuerungen (44) aufweist und ausgebildet ist, um: Daten zu empfangen, die einen Maschinenparameter der landwirtschaftlichen Ballenpresse (2) anzeigen; in Abhängigkeit von dem Maschinenparameter eine Ablegestrategie zum Ablegen eines oder mehrerer geformter Ballen (B) von der landwirtschaftlichen Ballenpresse (2) zu ermitteln, wobei die Ablegestrategie eine Anzeige eines Ablegemodus umfasst; und ein oder mehrere Steuersignale zum Steuern einer oder mehrerer betrieblicher Komponenten, die der Ballenpresse (2) zugeordnet sind, in Abhängigkeit von der ermittelten Ballenablegestrategie zu generieren und auszugeben.

2. Steuersystem nach Anspruch 1, **wobei** die Ablegestrategie ein Ausführen eines linearen Ablegemodus und/oder eines Vierteldrehungsablegemodus beinhalten kann.

3. Steuersystem nach Anspruch 1 oder Anspruch 2, **wobei** das Steuersystem betreibbar ist, um eine Ablegestrategie basierend auf einem Feuchtigkeitsgehalt des einen oder der mehreren geformten Ballen zu ermitteln.

4. Steuersystem nach einem der Ansprüche 1 bis 3, **wobei** die eine oder die mehreren betrieblichen Komponenten eine Nutzerschnittstelle aufweisen, die betreibbar ist, um einem Bediener der Ballenpresse eine Information, die die ermittelte Ablegestrategie anzeigt, zur Verfügung zu stellen.

5. Steuersystem nach Anspruch 4, **wobei** das Steuersystem ausgebildet ist, um das eine oder die mehreren Steuersignale zum Steuern des Betriebs der Nutzerschnittstelle zu generieren und auszugeben, um einem Bediener der landwirtschaftlichen Ballenpresse die ermittelte Ablegestrategie darzustellen.

6. Steuersystem nach einem der Ansprüche 1 bis 5, **wobei** die betriebliche Komponente einen Auswurfschacht (18) zum automatischen Ablegen eines oder mehrerer geformter Ballen (B) in Übereinstimmung mit der ermittelten Ablegestrategie aufweist.

7. Steuersystem nach Anspruch 6, **wobei** das Steuersystem ausgebildet ist, um das eine oder die mehreren Steuersignale zum automatischen Steuern des Auswurfschachts (18) zu generieren und auszugeben, um den einen oder die mehreren geformten Ballen (B) abzulegen.

8. Steuersystem nach einem der Ansprüche 1 bis 7, **wobei** das Steuersystem weiterhin ausgebildet ist, um: Sensordaten von einem Feuchtigkeitssensor zu empfangen, der mit der landwirtschaftlichen Ballenpresse verbunden ist; und in Abhängigkeit davon einen Feuchtigkeitsgehalt eines geformten Ballens zu ermitteln.

9. Steuersystem nach Anspruch 8, **wobei** der Feuchtigkeitssensor aufweist: einen Infrarotsensor und/oder einen Widerstandssensor und/oder einen optischen Sensor und/oder einen kapazitiven Sensor (150).

10. Steuersystem nach Anspruch 8 oder Anspruch 9, **wobei** der Feuchtigkeitssensor montiert ist an oder anderweitig verbunden ist mit der landwirtschaftlichen Ballenpresse (2) und ausgebildet ist, um in der landwirtschaftlichen Ballenpresse (2) gesammeltes Material zu überwachen.

11. Steuersystem nach Anspruch 10, **wobei** der Feuchtigkeitssensor montiert ist an oder anderweitig verbunden ist mit der landwirtschaftlichen Ballenpresse (2) und ausgebildet ist, um durch eine Erntegutaufnahmeeinrichtung (12) der landwirtschaftlichen Ballenpresse (2) gesammeltes Material und/oder Material innerhalb einer Ballenpresskammer (10) der Ballenpresse (2) zu überwachen.

12. Steuersystem nach einem der Ansprüche 1 bis 7, **wobei** das Steuersystem ausgebildet ist, um einen erwarteten Feuchtigkeitsgrad in Abhängigkeit von Daten, die die Betriebsumgebung der landwirtschaftlichen Ballenpresse (2) anzeigen, zu bestimmen.

13. Steuersystem nach Anspruch 12, **wobei** die Betriebsumgebungsdaten eine kartierte Umgebung aufweisen, die Informationen beinhaltet, die einen gemessenen oder erwarteten Feuchtigkeitsgrad von Material an einem oder mehreren Orten innerhalb der kartierten Umgebung anzeigen.

14. Steuersystem nach Anspruch 12 oder Anspruch 13, **wobei** die Betriebsumgebungsdaten eine Anzeige einer oder mehrerer Umgebungsbedingungen aufweisen, einschließlich einer Temperatur und/oder einer Jahreszeit und/oder einer Tageszeit und/oder einer Niederschlagsmessung und/oder einer Luftfeuchtigkeit.

15. Steuersystem nach einen der Ansprüche 1 bis 14, **wobei** das Steuersystem ausgebildet ist, um eine Nutzereingabe zu empfangen, die einen von einem Bediener der Ballenpresse (2) zur Verfügung gestellten Feuchtigkeitsgrad anzeigt, und in Abhängigkeit davon die Ablegestrategie zu ermitteln.

16. Steuersystem nach einem der Ansprüche 1 bis 15, **wobei** das Steuersystem betreibbar ist, um eine Ablegestrategie basierend auf einer Ballenlänge, einem Ballengewicht oder einer Lagenanzahl des einen oder der mehreren geformten Ballen (B) in dem Auswurfschacht (18) zu ermitteln.

17. Steuersystem nach einem der Ansprüche 1 bis 15, **wobei** das Steuersystem betreibbar ist, um eine Ablegestrategie basierend auf dem ermittelten Proteingehalt und/oder Fasergehalt und/oder Nitratgehalt und/oder Aschegehalt und/oder Feuchtigkeitsgehalt des einen oder der mehreren geformten Ballen in dem Auswurfschacht zu ermitteln.

18. Steuersystem mit: einem Auswurfschacht (18) zum Ablegen einer Mehrzahl von geformten Ballen (B); und einem Steuersystem nach einem der Ansprüche 1 bis 17, das ausgebildet ist, um einen Betrieb des Auswurfschachts (18) in Übereinstimmung mit einer ermittelten Ablegestrategie zu steuern.

19. Landwirtschaftliche Ballenpresse (2) mit einem und/oder die steuerbar ist durch ein Steuersystem nach einem der Ansprüche 1 bis 17, oder die ein System nach Anspruch 18 aufweist.

20. Verfahren zum Steuern eines Betriebs einer oder mehrerer steuerbarer Komponenten einer landwirtschaftlichen Ballenpresse (2), mit: Empfangen von Daten, die einen Maschinenparameter, der sich auf einen oder mehrere durch die landwirtschaftliche Ballenpresse (2) geformte Ballen (B) bezieht, anzeigen; Ermitteln einer Ablegestrategie zum Ablegen des einen oder der mehreren geformten Ballen (B) in Abhängigkeit von dem Maschinenparameter, wobei die Ablegestrategie eine Angabe eines Ablegemodus für jeden geformten Ballen (B) umfasst; und Steuern einer oder mehrerer betrieblicher Komponenten, die der Ballenpresse (2) zugeordnet sind, in Abhängigkeit von der ermittelten Ablegestrategie.

21. Computerlesbares Programm mit Instruktionen, welche, wenn das Programm durch einen Computer ausgeführt wird, das Steuersystem nach einem der Ansprüche 1 bis 18 oder die landwirtschaftliche Ballenpresse nach Anspruch 19 veranlassen, das Verfahren nach Anspruch 20 auszuführen.

## Revendications

1. Dispositif de commande destiné à commander le fonctionnement d'un ou plusieurs composants pouvant être commandés d'une presse à balle agricole (2), le dispositif de commande comprenant une ou plusieurs unités de commande (44) et étant configuré de manière à : recevoir des données représentatives d'un paramètre opérationnel de la presse à balle agricole (2) ; déterminer, en fonction du paramètre opérationnel, une stratégie de dépôt afin de déposer une ou plusieurs balles formées (B) à partir de la presse à balle agricole (2), la stratégie de dépôt comportant une indication d'un mode de dépôt ; et à produire et délivrer un ou plusieurs signaux de commande afin de commander un ou plusieurs composants opérationnels associés à la presse à balle (2) en fonction de la stratégie de dépôt de balle déterminée.

2. Dispositif de commande selon la revendication 1, dans lequel la stratégie de dépôt peut comprendre l'exécution d'un ou plusieurs parmi un mode de dépôt linéaire et un mode de dépôt en quart de tour.

3. Dispositif de commande selon la revendication 1 ou 2, dans lequel le dispositif de commande peut être utilisé afin de déterminer une stratégie de dépôt basée sur une teneur en humidité des une ou plusieurs balles formées.

4. Dispositif de commande selon l'une quelconque des revendications 1 à 3, dans lequel les un ou plusieurs composants opérationnels comprennent une interface d'utilisateur pouvant être utilisée afin de fournir des informations représentatives de la stratégie de dépôt déterminée à un opérateur de la presse à balle.

5. Dispositif de commande selon la revendication 4, dans lequel le dispositif de commande est configuré de manière à produire et à délivrer le ou les signaux de commande afin de commander le fonctionnement de l'interface utilisateur dans le but d'afficher la stratégie de dépôt déterminée à un opérateur de la presse à balle agricole.

6. Dispositif de commande selon l'une quelconque des revendications 1 à 5, dans lequel le composant opérationnel comprend une goulotte d'éjection (18) de manière à automatiser le dépôt de la ou des balles formées (B) en fonction de la stratégie de dépôt déterminée.

7. Dispositif de commande selon la revendication 6, dans lequel le dispositif de commande est configuré de manière à produire et à délivrer le ou les signaux de commande afin de commander automatiquement la goulotte d'éjection (18) dans le but de déposer la ou les balles formées (B).

8. Dispositif de commande selon l'une quelconque des revendications 1 à 7, dans lequel le dispositif de commande est configuré de manière à : recevoir des données de capteur à partir d'un capteur d'humidité associé à la presse à balle agricole ; et à déterminer un niveau d'humidité d'une balle formée en fonction de ces dernières.

9. Dispositif de commande selon la revendication 8, dans lequel le capteur d'humidité comprend un ou plusieurs parmi : un capteur à infrarouge, un capteur résistif, un capteur optique ; et un capteur capacitif (150).

10. Dispositif de commande selon la revendication 8 ou 9, dans lequel le capteur d'humidité est monté sur la presse à balle agricole (2) ou couplé d'une autre manière à cette dernière et configuré de manière à surveiller le matériau collecté dans la presse à balle agricole (2).

11. Dispositif de commande selon la revendication 10, le capteur d'humidité est monté sur la presse à balle agricole (2) ou couplé d'une autre manière à cette dernière et configuré de manière à surveiller le matériau collecté par un dispositif de ramassage de culture (12) de la presse à balle agricole (2) et/ou le matériau à l'intérieur d'un compartiment de formation de balle (10) de la presse à balle (2).

12. Dispositif de commande selon l'une quelconque des revendications 1 à 7, dans lequel le dispositif de commande est configuré de manière à déterminer un niveau d'humidité attendu en fonction de données représentatives de l'environnement opérationnel de la presse à balle agricole (2).

13. Dispositif de commande selon la revendication 12, dans lequel les données d'environnement opérationnel comprennent un environnement cartographié comprenant des informations représentatives d'un niveau d'humidité mesuré ou attendu pour le matériau à un ou plusieurs emplacements à l'intérieur de l'environnement cartographié.

14. Dispositif de commande selon la revendication 12 ou 13, dans lequel les données d'environnement opérationnel comprennent une indication d'une ou plusieurs conditions environnementales, comportant une ou plusieurs conditions parmi : une température, une période de l'année ; un moment de la journée ; une mesure de précipitations ; et une humidité.

15. Dispositif de commande selon l'une quelconque des revendications 1 à 14, dans lequel le dispositif de commande est configuré de manière à recevoir une entrée d'utilisateur représentative d'un niveau d'humidité fourni par un opérateur de la presse (2) et à déterminer la stratégie de dépôt en fonction de cette dernière.

16. Dispositif de commande selon l'une quelconque des revendications 1 à 15, dans lequel le dispositif de commande peut être utilisé de manière à déterminer une stratégie de dépôt sur la base de la longueur de balle, du poids de balle ou de la quantité de paille de la ou des balles formées (B) dans la goulotte d'éjection (18).

17. Dispositif de commande selon l'une quelconque des revendications 1 à 15, dans lequel le dispositif de commande peut être utilisé afin de déterminer une stratégie de dépôt sur la base d'une ou plusieurs parmi la teneur en protéines, la teneur en fibres, la teneur en nitrate, la teneur en cendres, la teneur en humidité, la teneur en nitrate ou la teneur en cendres déterminées des une ou plusieurs balles formées dans la goulotte d'éjection.

18. Dispositif de commande, comprenant : une goulotte d'éjection (18) afin de déposer une pluralité de balles formées (B) ; et un dispositif de commande selon l'une quelconque des revendications 1 à 17 configuré de manière à commander le fonctionnement d'une goulotte d'éjection (18) en fonction d'une stratégie de dépôt déterminée.

19. Presse à balle agricole (2) comprenant un dispositif de commande selon l'une quelconque des revendications 1 à 17 et/ou pouvant être commandée par ce dernier, ou comprenant un dispositif selon la revendication 18.

20. Procédé de commande de fonctionnement d'un ou plusieurs composants pouvant être commandés d'une presse à balle agricole (2), comprenant : la réception de données représentatives d'un paramètre opérationnel se rapportant à une ou plusieurs balles formées (B), formées par la presse à balle agricole (2) ; la détermination, en fonction du paramètre opérationnel, d'une stratégie de dépôt permettant de déposer la ou les balles formées (B), la stratégie de dépôt comportant une indication d'un mode de dépôt pour chaque balle formée (B) ; et la commande d'un ou plusieurs composants opérationnels associés à la presse à balle (2) en fonction de la stratégie de dépôt déterminée.

21. Programme pouvant être lu par un ordinateur comprenant des instructions qui, lorsque le programme est exécuté par un ordinateur, conduisent le dispositif de commande selon les revendications 1 à 18 ou la presse à balle agricole selon la revendication 19 à mettre en oeuvre le procédé selon la revendication 20.
